# EUROPÄISCHE PATENTANMELDUNG

(11) **EP 0 600 366 A1**
(43) Veröffentlichungstag der Anmeldung: **08.06.1994**
(21) Anmeldenummer: 93118938.5
(22) Anmeldetag: 24.11.1993
(51) Int. Cl.: C09K 11/78, H01J 61/44

(54) **Samarium-dotierter Leuchtstoff**

(30) Priorität: 04.12.1992 DE 4240899
(71) Anmelder: Patent-Treuhand-Gesellschaft für elektrische Glühlampen mbH, D-81543 München (DE)
(72) Erfinder: Reichardt, Jürgen, Dr., D-86830 Schwabmünchen (DE)

(57) **Zusammenfassung**

Die Erfindung betrifft einen Leuchtstoff, insbesondere für Quecksilber-Niederdruckentladungslampen, mit einem Gehalt an (SE,Eu)₂O₃, worin SE = Seltenerdmetall, insbesondere Y, mit einem Dotierungsgehalt an Samariumoxid. Der Dotierungsgehalt liegt vorzugsweise im Bereich zwischen 10 und 1000 ppm und ermöglicht bis zu 3% gesteigerte Lampen-Lichtausbeuten. Die Erfindung betrifft weiterhin ein Verfahren zur Herstellung eines solchen Leuchtstoffs, bei dem einer Seltenerdmetall-Salzlösung, vor der Fällung des Mischoxalats und dessen thermische Weiterbehandlung in an sich bekannter Weise, die gewünschte Dotierungsmenge einer Samarium-Verbindung zugesetzt wird.

## Beschreibung

Die Erfindung betrifft einen Leuchtstoff, insbesondere für Quecksilber-Niederdruckentladungslampen, mit einem Gehalt an (SE,Eu)₂O₃, worin SE = Seltenerdmetall, insbesondere Y. Weiterhin betrifft die Erfindung eine Leuchtstoffmischung für eine Dreibandenlampe, enthaltend einen Blauleuchtstoff mit Emissionsmaximum im Bereich von 450 nm, einen Grünleuchtstoff mit Emissionsmaximum im Bereich von 545 nm, sowie einen Rotleuchtstoff mit Emissionsmaximum im Bereich von 610 nm, sowie eine Leuchtstofflampe mit einer Leuchtstoffbeschichtung auf der Innenwandfläche des Lampenkolbens. Außerdem betrifft die Erfindung ein Verfahren zur Herstellung eines Leuchtstoffs der genannten Art.

Leuchtstoffe der eingangs genannten Art werden bevorzugt für Dreibanden-Leuchtstofflampen eingesetzt, deren Leuchtstoffmischung drei Einzelleuchtstoffe umfaßt, die jeweils im blauen, grünen oder roten Bereich des sichtbaren Spektrums emittieren. Durch geeignete Wahl des Mischungsverhältnisses aller drei Einzelleuchtstoffe läßt sich weißes Licht von gewünschter Farbtemperatur erzeugen. Lichtausbeute und Farbwiedergabe sind deutlich besser als bei Halophosphat-Standardlampen. Das Emissionsmaximum des Blauleuchtstoffs soll dabei zwischen 430 nm und 490 nm liegen, während das des Grünleuchtstoffs zwischen 520 nm und 565 nm und das des Rotleuchtstoffs zwischen 590 nm und 630 nm liegen sollte.

Insbesondere als Rotleuchtstoff solcher Dreibandenlampen hat sich das (Y,Eu)-Mischoxid durchgesetzt, da es mit scharfbandiger Hauptlinie bei 611 nm günstige Emissionseigenschaften hat, die es mit ausgezeichneter Quantenausbeute und guter Stabilität unter den Betriebsbedingungen von Quecksilber-Niederdruckentladungslampen aufweist.

Die im Stand der Technik bekannten Rotleuchtstoffe dieser Art werden aus Y₂O₃ und Eu₂O₃ besonders hoher Reinheit hergestellt, um eine maximale Lichtausbeute zu erreichen. Im Stand der Technik ist es bekannt, daß bereits geringste Spuren von Fremdelementen, insbesondere von Vertretern der Übergangselemente wie Ti, V, Cr, Mn, Fe, Co, Ni, Cu und von anderen Seltenerdelementen die Luminszenzausbeute wesentlich geschwächt wird.

Die Lumineszenz-löschende Wirkung schon von kleinsten Anteilen anderer seltener Erden wie Ce, Pr, Nd, Ho, Dy, Er, Yb, Tb, Tm und Sm ist bereits früher experimentell untersucht und nachgewiesen worden. So schildert Lavéant in Rev. chim. minérale 10, 329 bis 345 (1973) Untersuchungen der Pulverhelligkeit bei Anwesenheit von Samariumspuren, wobei die Helligkeit mit zunehmendem Samariumgehalt stetig abnimmt und generell unter der entsprechender Leuchtstoffproben ohne Samariumgehalt bleibt.

Es ist Aufgabe der Erfindung, Leuchtstoffe und Leuchtstoffmischungen der eingangs genannten Art anzugeben, die eine höhere Lampen-Lichtausbeute ergeben als die im Stand der Technik bekannten hochreinen (Y,Eu)₂O₃-Leuchtstoffe. Es ist eine weitere Aufgabe der Erfindung, Leuchtstofflampen der eingangs genannten Art mit gegenüber dem Stand der Technik verbesserter Lampen-Lichtausbeute anzugeben.

Eine weitere Aufgabe der Erfindung liegt in der Bereitstellung eines Verfahrens zur Herstellung solcher Leuchtstoffe und Leuchtstoffmischungen.

Zur Lösung dieser Aufgaben sind die in den Oberbegriffen der unabhängigen Ansprüche definierten Gegenstände und Verfahren erfindungsgemäß mit den in den jeweils zugeordneten kennzeichnenden Teilen definierten Merkmalen ausgestattet.

Vorteilhafte Ausgestaltungen der Erfindung sind in den Unteransprüchen definiert.

Die Erfindung beruht im Kern auf der völlig überraschenden Feststellung, daß zwar die im Stand der Technik (beispielsweise bei Lavéant, loc. cit.) zu findenden Ergebnisse hinsichtlich des Einflusses von Sm-Spuren auf die Pulverhelligkeit völlig zutreffen, jedoch bei Einsatz dieser Leuchtstoffe in der Lampe eine Erhöhung, statt einer Verringerung, der Lichtausbeute gegenüber den bekannten hochreinen (Y,Eu)-Mischoxidleuchtstoffen eintritt.

Experimentell wurde gefunden, daß mit von 0 auf etwa 100 ppm zunehmender Sm-Dotierung die Lampen-Lichtausbeute gegenüber dem Stand der Technik zunächst anwächst. Bei Sm-Gehalten im Bereich 100 ppm erreicht die Lichtbeutesteigerung ein flaches Maximum und die Lichtausbeute liegt hier, im Vergleich zum Stand der Technik, um etwa 3% höher, gemessen in Lampen vom Typ L 36W. Wird die Sm-Konzentration weiter erhöht, fällt die zusätzliche Lichtausbeute langsam wieder etwa auf das Niveau einer nicht mit Samarium dotierten Probe ab. Andererseits zeigte es sich, daß mit zunehmender Sm-Dotierung bis etwa 100 ppm die am Pulver bei Anregung mit UV-Strahlung 254 nm gemessene relative Quantenausbeute leicht abnimmt, um mit weiter zunehmendem Sm-Gehalt wieder etwa auf das Niveau einer nicht mit Samarium dotierten Probe anzusteigen.

Damit verläuft die Lampenlichtausbeute in Abhängigkeit vom Sm-Gehalt praktisch spiegelbildlich zur relativen Quantenausbeute bei der Pulvermessung, bei entsprechender Sm-Dotierung.

Ohne daß eine Festlegung auf irgendeine theoretische Erklärung beabsichtigt ist, wird gegenwärtig angenommen, daß der Grund dieses scheinbar widersprüchlichen Verhaltens in den unterschiedlichen Anregungsbedingungen bei Lampen- und Pulvermessung liegt.

Im folgenden wird die Erfindung anhand mehrerer Beispiele und Vergleichsversuche näher erläutert.

Die folgenden drei Beispiele erläutern die Herstellung Samarium-dotierter (Y,Eu)-Leuchtstoffe mit unterschiedlichen Samariumgehalten:

### Beispiel 1

120,050 g Y₂O₃, 4,950 g Eu₂O₃ und 7,250 mg Sm₂O₃ wurden gemeinsam in 1,250 l H₂O suspendiert und unter Zulauf von 0,255 l HNO₃ (65%) aufgelöst. Durch Zugabe von 225,000 g Oxalsäure gelöst in 2,250 l H₂O bei 35-40°C erfolgt die Ausfällung eines Y,Eu-Sm-Mischoxalates, das nach Filtration, H₂O-Waschung und Trocknung durch dreistündige Glühung bei 800 °C an Luft zu Y,Eu,Sm-Mischoxid zersetzt wurde. Durch anschließende sechsstündige Hochtemperaturglühung bei 1600 °C, Zerkleinerung und Siebung wurde ein Leuchtstoff der Zusammensetzung Y_{1,95}Eu_{0,05}Sm_{0,00008}O₃ mit einer Lichtausbeute von 71,2 lm/W erhalten.

### Beispiel 2

120,050 g Y₂O₃, 4,950 g Eu₂O₃ und 14,500 mg Sm₂O₃ ergaben nach gleichem Herstellverfahren einen Leuchtstoff der Zusammensetzung Y_{1,95}Eu_{0,05}Sm_{0,00015}O₃ mit einer Lichtausbeute von 72,1 lm/W.

### Beispiel 3

120,050 g Y₂O₃, 4,950 g Eu₂O₃ und 36,250 mg Sm₂O₃ ergaben nach gleichem Herstellverfahren einen Leuchtstoff der Zusammensetzung Y_{1,95}Eu_{0,05}Sm_{0,00038}O₃ mit einer Lichtausbeute von 70,7 lm/W.

### Beispiel 4

120,050 g Y₂O₃ und 4,950 g Eu₂O₃ ergaben nach gleichem Herstellungsverfahren einen Leuchtstoff der Zusammensetzung Y_{1,95}Eu_{0,05}O₃ mit einer Lichtausbeute von 70,0 lm/W.

Wie in den Beispielen 1 bis 3 beschrieben, wurden insgesamt sechs Proben mit unterschiedlich hoher Sm-Dotierung hergestellt. Die Sm-Gehalte sind der Tabelle 1 zu entnehmen.

Mit den so erhaltenen Proben wurden einerseits die relativen Quantenausbeuten (%) am Pulver gemessen, andererseits die Lichtausbeute (lm/W) in Leuchtstofflampen 36W.

**Tabelle 1**

| Sm [ppm] | | Lampenmessung Lichtausbeute [lm/W] | Pulvermessung rel. Quantenausbeute [%] |
|---|---|---|---|
| eingewogen | gefunden | | |
| 0 | < 3 | 70,2 | 100,0 |
| 10 | 9 | 70,9 | 100,4 |
| 25 | 23 | 71,6 | 98,7 |
| 50 | 45 | 71,2 | 97,8 |
| 100 | 93 | 72,1 | 97,7 |
| 250 | 221 | 70,7 | 99,0 |

Wie man sogleich erkennt, erreicht die Lichtausbeute bei einer Dotierung mit etwa 100 ppm Samarium, gemessen an der Lampe, gerade dort den höchsten Wert, wo die Quantenausbeute bei der Messung am Pulver den geringsten Wert ergibt.

Damit zeigt sich, daß die im Stand der Technik angegebenen, zutreffenden Messungen am Leuchtstoffpulver eine Voraussage über das Verhalten des Leuchtstoffs in der Lampe nicht zulassen. Die zunächst nachteilig erscheinende Anwesenheit von Samarium in kleinen Mengen ist tatsächlich vorteilhaft und ergibt statt der befürchteten geringeren eine tatsächlich höhere Lichtausbeute.

Die Dotierung mit kleinen Mengen Samarium ist bei Leuchtstoffen der hier betrachteten Art also eine unaufwendige Möglichkeit, zu gegenüber dem Stand der Technik vergrößerten Lichtausbeuten zu kommen.

## Patentansprüche

1. Leuchtstoff, insbesondere für Quecksilber-Niederdruckentladungslampen, mit einem Gehalt an (SE,Eu)₂O₃, worin SE = Seltenerdmetall, insbesondere Y, gekennzeichnet durch einen Dotierungsgehalt an Samariumoxid.

2. Leuchtstoff nach Anspruch 1,
dadurch gekennzeichnet, daß der Leuchtstoff ein Mischoxid entsprechend der allgemeinen Formel
Y_{2-(x+y)}EuₓSm_{y}O₃
umfaßt, wobei gilt: 0,01 < x < 0,1 und 0,00001 < y < 0,001.

3. Leuchtstoff nach Anspruch 2,
dadurch gekennzeichnet, daß x und y in den Bereichen 0,03 < x < 0,07 und 0,00003 < y < 0,0003 liegen.

4. Leuchtstoffmischung für eine Dreibandenlampe, enthaltend einen Blauleuchtstoff mit Emissionsmaximum im Bereich von
450 nm, einen Grünleuchtstoff mit Emissionsmaximum im Bereich von 545 nm, sowie einen Rotleuchtstoff mit Emissionsmaximum im Bereich von 610 nm,
dadurch gekennzeichnet, daß der Rotleuchtstoff einen Leuchtstoff gemäß einem der Ansprüche 1 bis 3 umfaßt.

5. Leuchtstofflampe mit einer Leuchtstoffbeschichtung auf der Innenwandfläche des Lampenkolbens,
dadurch gekennzeichnet, daß die Leuchtstoffbeschichtung einen Leuchtstoff bzw. eine Leuchtstoffmischung gemäß einem der Ansprüche 1 bis 4 umfaßt.

6. Verfahren zur Herstellung eines Leuchtstoffs gemäß einem der Ansprüche 1 bis 3,
dadurch gekennzeichnet, daß einer SE-Salzlösung, insbesondere einer SE-Nitrat- oder Chlorid-Lösung eine der gewünschten Dotierung entsprechende Menge einer Sm-Verbindung zugesetzt wird und anschließend in an sich bekannter Weise eine Fällung des SE-Mischoxalats und dessen thermische Zersetzung zum Mischoxid sowie Glühen zum Leuchtstoff erfolgen.

7. Verfahren nach Anspruch 6,
dadurch gekennzeichnet, daß der SE-Salzlösung die Sm-Verbindung in Form einer, vorzugsweise gleichanionigen, Sm-Salzlösung zugesetzt wird.

8. Verfahren nach Anspruch 6 oder 7,
dadurch gekennzeichnet, daß das Glühen zum Leuchtstoff bei ca. 1600 °C erfolgt.
